# EUROPÄISCHE PATENTANMELDUNG

(11) **EP 1 920 899 A1**
(43) Veröffentlichungstag der Anmeldung: **14.05.2008**
(21) Anmeldenummer: 07021445.7
(22) Anmeldetag: 05.11.2007
(51) Int. Cl.: B29C 45/14

(54) **Verfahren zur Herstellung von Kunststoff-Hybrid-Bauteilen, korrespondierendes Werkzeug und Verwendung eines solchen Werkzeugs**

(30) Priorität: 13.11.2006 DE 102006053654
(71) Anmelder: Voestalpine Automotive Holding GmbH, 4020 Linz (AT)
(72) Erfinder: Weitkamp, Michael, 49076 Osnabrück (DE)
(74) Vertreter: ten Brink, Carsten

(57) **Zusammenfassung**

Es wird ein Verfahren zur Herstellung von Kunststoffspritz- oder -pressteilen, welche bei ihrem Formgebungsprozess mit einem oder mehreren metallischen Hohlprofilen (10) kombiniert werden, angegeben, bei dem in einem Spritz- bzw. Presswerkzeug für eine Aufnahme einer gespritzten oder gepressten Kunststoffmasse eine Kavität (24) ausgebildet ist, in die sich ein Anbindungsflansch (26) des metallischen Hohlprofils (10) erstreckt, wobei das oder jedes metallische Hohlprofil (10) durch Dichtflächen (28, 30) am Rande der Kavität (24) gegen die Press- bzw. Spritzkräfte der Kunststoffmasse (12) während des Formgebungsprozesses geschützt ist.

## Beschreibung

Die Erfindung betrifft ein Verfahren zur Herstellung von Kunststoff-Hybrid-Bauteilen, nämlich Kunststoffspritz- oder Pressteilen, welche bei ihrem Formgebungsprozess mit einem oder mehreren metallischen Hohlprofilen kombiniert, insbesondere verstärkt, werden. Dazu ist ein Spritz- bzw. Presswerkzeug, das im Folgenden auch als Kunststoffformgebungswerkzeug bezeichnet wird, vorgesehen, welches für eine Aufnahme einer gespritzten oder gepressten Kunststoffmasse eine Kavität ausbildet. Zur Aufnahme des metallischen Hohlprofils kann vorgesehen sein, dass das Kunststoffformgebungswerkzeug eine entsprechende Hohlprofilaufnahme aufweist.

Bei den im Stand der Technik zur Herstellung von Kunststoff-Hybrid-Bauteilen verfolgten Ansätzen zur Verstärkung von Kunststoffteilen durch die Verbindung mit einem metallischen Hohlprofil während des Formgebungsprozesses für das Kunststoffteil (inmould assembly) wird das metallische Hohlprofil in nachteiliger Art und Weise den Press- bzw. Spritzdruckkräften der Kunststoffmasse ausgesetzt. Dies kann zu einer Verformung des metallischen Hohlprofils führen. Des Weiteren kann sich unter Einfluss der durch die Kunststoffmasse eingetragenen Kräfte eine Verschiebung des metallischen Hohlprofils oder einzelner Abschnitte des metallischen Hohlprofils ergeben, so dass im Ergebnis das Hybridbauteil nicht mit vorgegebenen oder vorgebbaren Spezifikationen, insbesondere Maßspezifikationen, übereinstimmt. Um derartigen Press- bzw. Spritzdruckkräften entgegenzuwirken und insbesondere ein Kollabieren des Hohlprofils zu vermeiden, ist vorgeschlagen worden, den Hohlraum des Profils mit einer druckstabilen Füllung, beispielsweise einem Kern, zu versehen. Das Einbringen einer solchen druckstabilen Füllung in den Hohlraum des Profils ist allerdings technisch aufwendig und schränkt die Freiheiten bei der Formgebung des Profils ein.

Zum druckschriftlichen Stand der Technik wird auf die WO 2004/011315 verwiesen.

Entsprechend besteht eine Aufgabe der vorliegenden Erfindung darin, ein Verfahren zur Herstellung von Kunststoff-Hybrid-Bauteilen der eingangs genannten Art anzugeben, bei dem die o.g. Nachteile vermieden oder zumindest hinsichtlich ihrer Auswirkungen reduziert werden. Des Weiteren besteht eine Aufgabe der Erfindung darin, ein zur Verwendung bei dem Herstellungsverfahren geeignetes und bestimmtes Kunststoffformgebungswerkzeug anzugeben.

Erfindungsgemäß wird die Aufgabe hinsichtlich des Herstellungsverfahrens mit den Merkmalen des Anspruchs 1 gelöst. Dazu ist bei einem Verfahren zur Herstellung von Kunststoffspritz- oder -pressteilen, welche während ihres Formgebungsprozesses mit einem oder mehreren metallischen Hohlprofilen in einem Spritz- bzw. Presswerkzeug, dem Kunststoffformgebungswerkzeug, das für eine Aufnahme einer gespritzten oder gepressten Kunststoffmasse eine Kavität ausbildet, in die sich ein Anbindungsflansch des metallischen Hohlprofils erstreckt, kombiniert werden, vorgesehen, dass das oder jedes metallische Hohlprofil durch Dichtflächen oder dergleichen am Rande der Kavität gegen die Press- bzw. Spritzdruckkräfte der Kunststoffmasse während des Formgebungsprozesses geschützt ist. Durch die im Kunststoffformgebungswerkzeug ausgebildeten Dichtflächen, also Bereiche oder Abschnitte im Formgebungswerkzeug, welche die zur Aufnahme der Kunststoffmasse vorgesehene Kavität gegen einen Bereich, in dem das metallische Hohlprofil angeordnet ist, abgrenzen, ist gewährleistet, dass sich beim Einpressen oder Einspritzen der Kunststoffmasse ergebende Kräfte oder sonstige Effekte, insbesondere Druck und/oder Temperatur, nicht oder nur in einem nicht "schädlichen" Umfang auf das jeweilige metallische Hohlprofil, oder ggf. eine Mehrzahl von Hohlprofilen, auswirken. Beschädigungen, insbesondere Verformungen, oder Verschiebungen des metallischen Hohlprofils während des Fertigungsprozesses werden damit wirksam verhindert.

Das Ergebnis des erfindungsgemäßen Herstellungsverfahrens ist ein Metallhohlprofil-Kunststoff-Hybridbauteil, bei dem der gespritzte oder gepresste Kunststoff durch mindestens ein metallisches Hohlprofil verstärkt ist, so dass sich insgesamt gleichzeitig ein leichtgewichtiges aber verwindungssteifes Bauteil ergibt, das auch hinsichtlich seiner metallischen Bestandteile vorgegebenen Spezifikationen, insbesondere vorgegebenen Maßen, mit hoher Genauigkeit entspricht.

Der o.g. parallele Aspekt der Erfindung wird durch ein Kunststoffformgebungswerkzeug mit den Merkmalen des Anspruchs 7 gelöst. Dabei ist bei einem Kunststoffformgebungswerkzeug zur Verwendung bei einem Herstellungsverfahren der oben beschriebenen oder nachfolgend näher erläuterten Art vorgesehen, dass dieses zumindest eine Hohlprofilaufnahme zur Aufnahme des metallischen Hohlprofils und mindestens eine Kavität zur Aufnahme der Kunststoffmasse aufweist und dass zumindest in einem Übergangsbereich zwischen Hohlprofilaufnahme und Kavität eine Dichtfläche, ein Dichtabschnitt oder dergleichen ausgebildet ist.

Wenn das metallische Hohlprofil in dem Spritz- bzw. Presswerkzeug, insbesondere einer Werkzeughälfte des Spritz- bzw. Presswerkzeugs, justiert oder fixiert wird oder justierbar bzw. fixierbar ist, ist eine besonders maßhaltige Herstellung des Metallhybridbauteils möglich. Bevorzugt kann dazu in dem Kunststoffformgebungswerkzeug in dessen Hohlprofilaufnahme eine Innenkontur ausgebildet sein, die zur Justierung des metallischen Hohlprofils zumindest abschnittsweise auf einen Abschnitt der Außenkontur des Hohlprofils abgestimmt ist. Das Hohlprofil ist also in dem Kunststoffformgebungswerkzeug durch die Hohlprofilaufnahme unverschieblich aufgenommen, so dass, wenn die Dichtflächen in Kontakt mit einem Abschnitt des in die Kavität ragenden Anbindungsflansches kommen, das Hohlprofil in dem Spritz- bzw. Presswerkzeug auch fixiert wird.

Der Anbindungsflansch weist bevorzugt einen Kragen, eine Abstellung oder dergleichen und/oder ein oder mehrere Durchflusslöcher auf. Diese sind zur formschlüssigen Verbindung zwischen dem Hohlprofil und der Kunststoffmasse vorgesehen und gewährleisten einen innigen, dauerhaft belastbaren Kontakt. Die mechanische Belastbarkeit des Kontaktes lässt sich noch weiter verbessern, wenn der Anbindungsflansch mehrere Durchflusslöcher jeweils mit Kragen aufweist.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombinationen zu beanspruchen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen.

Das Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- Fig. 1: eine Momentaufnahme bei der Herstellung eines Metallhybridbauteils,
- Fig. 2 bis Fig. 5: Detailansichten im Bereich eines vom den Hybridbauteil umfassten Anbindungsflansches
und
- Fig. 6: ein Anwendungsbeispiel eines solchen Metallhybridbauteils.

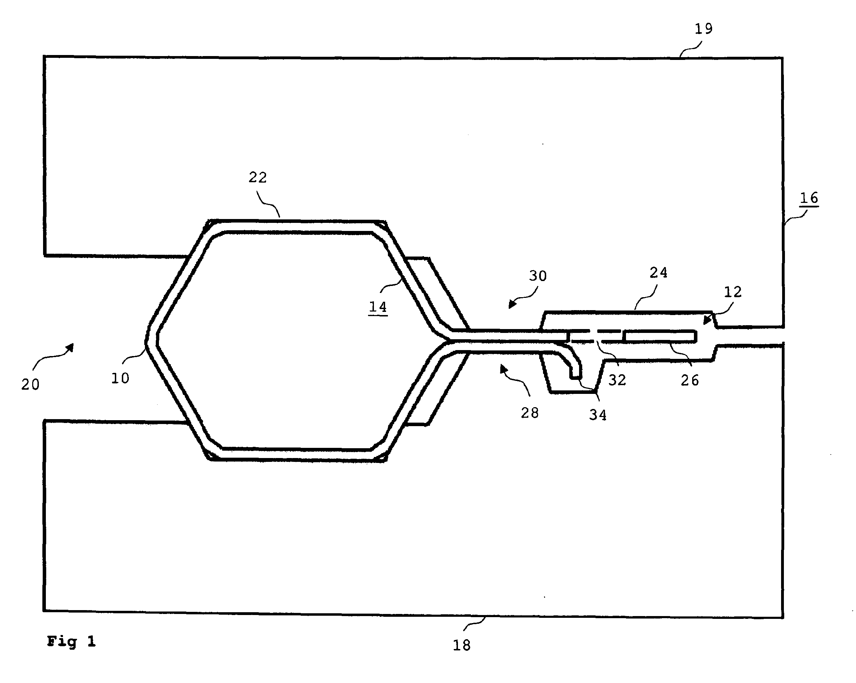

Fig. 1 zeigt in einer Momentaufnahme die Herstellung eines im dargestellten Beispiel aus einem rollgeformten Metallhohlprofil 10 und einem eingespritzten oder verpressten Kunststoff 12 gebildeten Metallhybridbauteils 14. Zu dessen Herstellung ist als Spritz- oder Presswerkzeug ein Kunststoffformgebungswerkzeug 16 vorgesehen, von dem im dargestellten Szenario ein Unterteil 18 und ein Oberteil 19 einer Spritz-/Pressform gezeigt werden. Wenn im Folgenden vom Kunststoffformgebungswerkzeug 16 die Rede ist, meint dies entweder dessen Unterteil 18, dessen Oberteil 19 oder die Kombination von Unter- und Oberteil 18, 19.

Im Kunststoffformgebungswerkzeug 16 ist zur Aufnahme des metallischen Hohlprofils 10 eine Hohlprofilaufnahme 20 ausgebildet. Die Hohlprofilaufnahme 20 weist eine zumindest abschnittsweise auf eine hier wabenförmig ausgebildete Außenkontur des metallischen Hohlprofils 10 abgestimmte Innenkontur 22 auf. Zur Aufnahme von eingespritztem oder verpresstem bzw. einspritzbarem oder verpressbarem Kunststoff 12 bildet das Kunststoffformgebungswerkzeug 16 zumindest eine Kavität 24 aus. In diese hinein erstreckt sich zumindest ein Anbindungsflansch 26 oder dergleichen des metallischen Hohlprofils 10. Durch Dichtflächen 28, 30 im Unter- bzw. Oberteil 18, 19 des Kunststoffformgebungswerkzeugs 16 am Rande der Kavität 24 ist das metallische Hohlprofil 10 während des Formgebungsprozesses des Hybridbauteils 14 gegen Press- bzw. Spritzdruckkräfte oder sonstige Einflüsse der Kunststoffmasse 12 geschützt. Bei einem metallischen Hohlprofil 10 in Form eines rollgeformten Metallhohlprofilteils, wie dargestellt, bei dem sich der Anbindungsflansch 26 aus zwei übereinander liegenden Metallschichten ergibt, bewirken die Dichtflächen 28, 30 zudem einen gewünschten, nahezu spaltfreien Kontakt zwischen den Metallschichten, so dass sich bei Anwendung des Verfahrens gemäß der Erfindung sogar Erleichterungen in Bezug auf die Herstellung des Metallhohlprofils 10 insoweit ergeben, als dessen Hohlraum nicht durch einen vorgelagerten Verfahrensschritt, etwa Löten, Schweißen, Kleben oder dergleichen, geschlossen werden muss. Zudem wird durch den mittels der Dichtflächen 28, 30 auf den Anbindungsflansch 26 ausgeübten Druck das Hohlprofil 10 selbst dann in Bezug auf das Kunststoffformgebungswerkzeug 16, insbesondere dessen Kavität 24, fixiert, wenn das Formgebungswerkzeug 16 keine Hohlprofilaufnahme 20 oder keine Hohlprofilaufnahme 20 mit auf die Außenkontur des Hohlprofils 10 abgestimmter Innenkontur 22 aufweist.

Wie dargestellt weist der Anbindungsflansch 26 in einem in die Kavität 24 hineinragenden Bereich entweder ein oder mehrere Durchflusslöcher 32 und/oder ein oder mehrere Kragen 34, Abstellungen oder dergleichen auf. Zur verbesserten Darstellung einzelner Details im Bereich der Kavität 24 oder des Abschnitts des Anbindungsflansches 26 in diesem Bereich wird die weitere Beschreibung mit Bezug auf die nachfolgenden Figuren fortgesetzt.

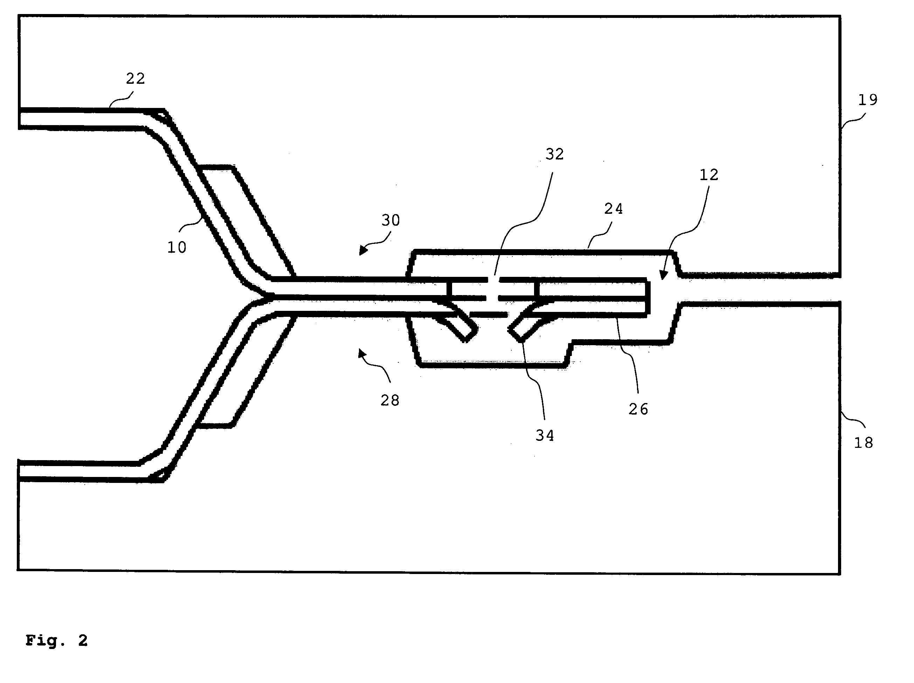

Darin zeigt Fig. 2 einen Ausschnitt aus einer Darstellung ähnlich wie Fig. 1 im Bereich der Kavität 24. Ersichtlich ergibt sich der Anbindungsflansch 26 aus zwei sich aus dem Hohlbereich des Metallprofils 10 fortsetzenden Metallflächen, wobei beide Flächen zumindest eine Bohrung aufweisen, die übereinander zu liegen kommen und ein Durchflussloch 32 bilden. Eine der Bohrungen ist dabei mit einem Kegelkragen 34 ausgeführt.

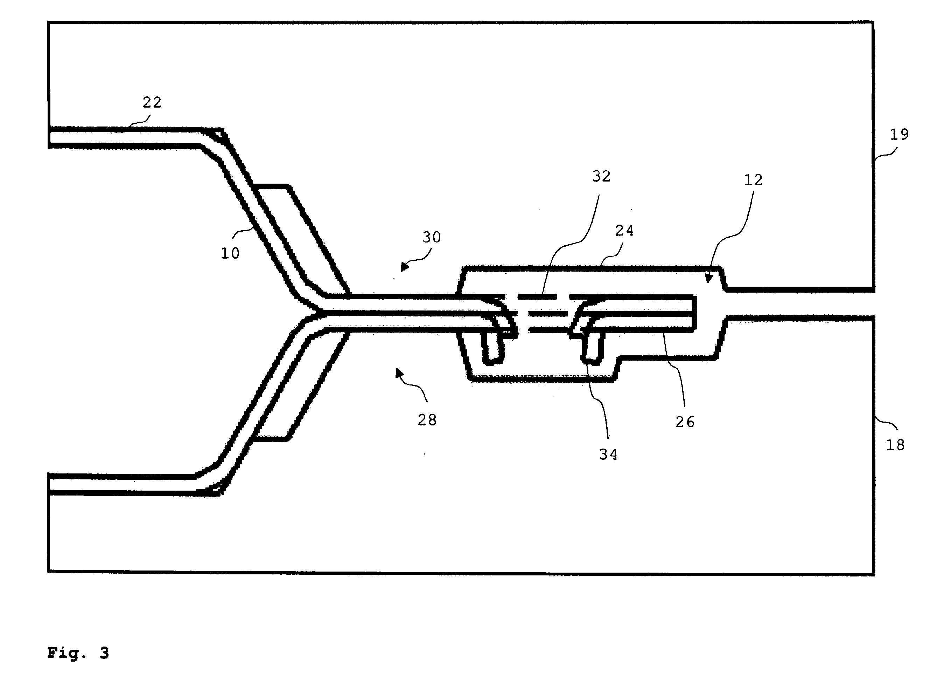

Die Darstellung in Fig. 3 entspricht weitestgehend der Darstellung in Fig. 2. Allerdings ist hier ein Durchflussloch 32 mit formschlüssigem Kragen 34 dargestellt.

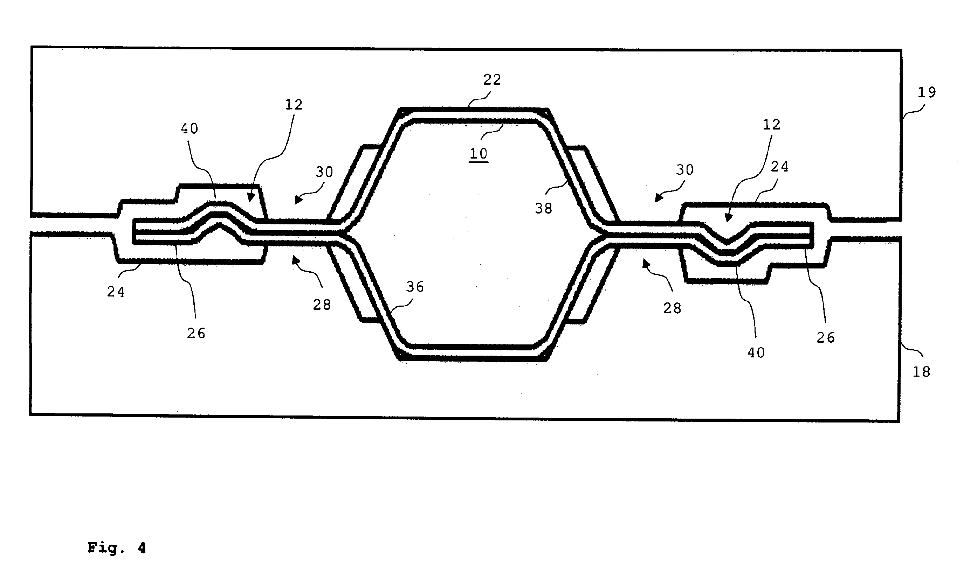

Wie weiter in Fig. 4 gezeigt, kann das metallische Hohlprofil 10, abweichend von der Darstellung in Fig. 1, sich auch durch Kombination zweier rollgeformter oder gepresster Blechschalen 36, 38 ergeben, wobei zu deren inniger Verbindung zwei sich jeweils in den Bereich einer Kavität 24 erstreckende Anbindungsflansche 26 vorgesehen sind, die an ihrem in die jeweilige Kavität 24 hineinragenden Ende entweder jeweils mindestens ein Durchflussloch 32 (vergleiche Fig. 1-3) und/oder einen Kragen 34 (vergleiche erneut Fig. 1-3) und/oder ein Profil 40 (vergleiche Fig. 4) aufweisen. Bei dem Profil 40 kann es sich um ein Wellenprofil, ein Trapezprofil, ein Dreiecksprofil, etc. handeln, wobei wesentlich ist, dass der in einer unteren Blechschale 36 gebildete Abschnitt des Profils 40 formschlüssig oder zumindest abschnittsweise formschlüssig zu dem korrespondierenden, in der oberen Blechschale 38 gebildeten Profil 40 ausgebildet ist.

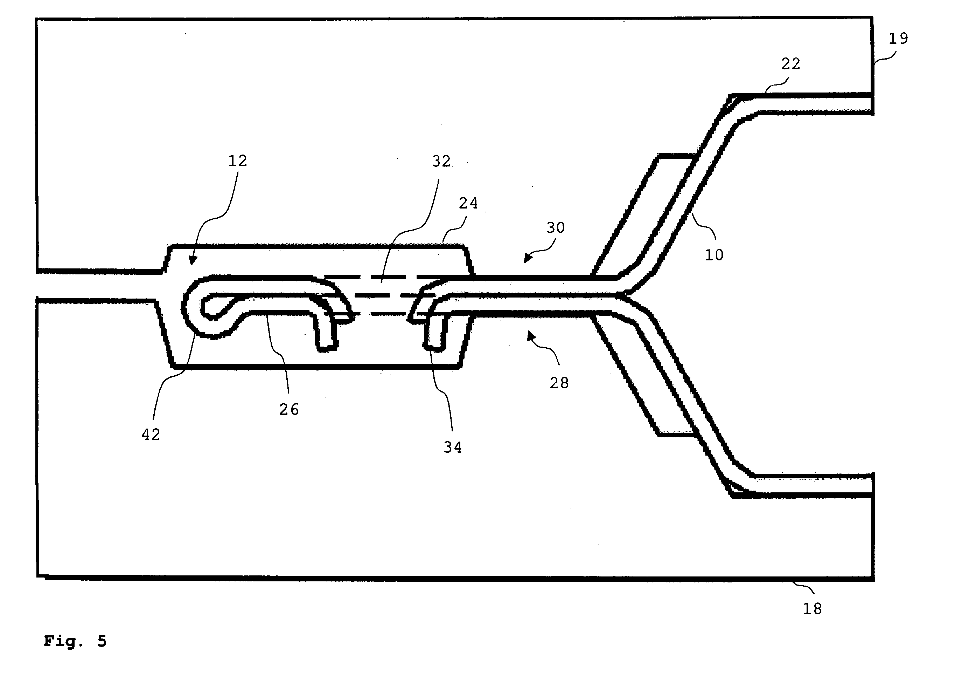

Wie abschließend in Fig. 5 gezeigt, kann ein Metallprofil 10 mit zwei Anbindungsflanschen 26, wie in Fig. 4 dargestellt, auch einstückig hergestellt sein, wenn einer der Anbindungsflansche 26, wie in Fig. 5 dargestellt ausgebildet ist; dabei wirkt ein Umlegebereich 42, in dem sich der Flansch 26 durch Umlegen der beiden gegenläufigen Metallflächen ergibt, für die umgebende Kunststoffmasse 12 wie ein Kragen 34. Zusätzlich zu diesem Umlegebereich 42 können Durchflusslöcher 32, weitere Kragen 34 und/oder Profile 40 in einfacher oder mehrfacher Ausführung vorgesehen sein.

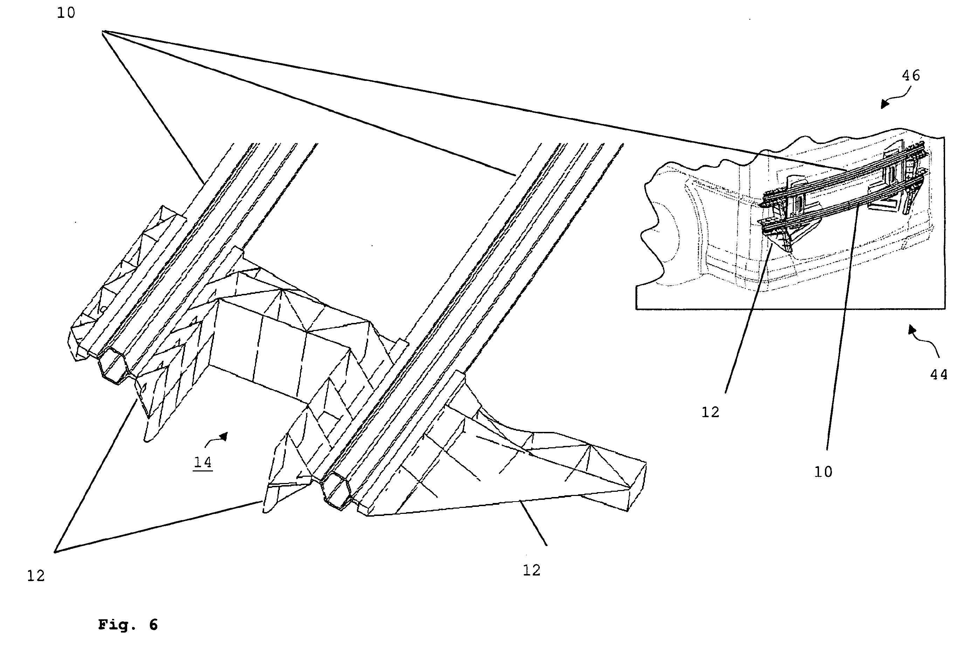

Hinsichtlich einer Mehrzahl von Durchflusslöchern 32, Kragen 34 oder dergleichen sowie eine Längserstreckung eines Profils 40 kann sich dieses im Wesentlichen nach der Gesamtgeometrie des jeweiligen Hybridbauteils 14 und/oder dem oder jedem davon umfassten Hohlprofil 10 richten. Exemplarisch ist in Fig. 6 ein solches Hybridbauteil 14 dargestellt, das als Träger oder dergleichen zur Anbringung weiterer Bauteile z.B. im Frontbereich 44 (aber auch Fahrzeugboden, Rücksitzlehnen oder allgemein großflächigen Bereichen, die partiell mit Kraft beaufschlagt oder beaufschlagbar sind) eines Kraftfahrzeugs 46 vorgesehen ist. Man erkennt, dass das Hybridbauteil 14 zwei Hohlprofile 10 umfasst, wobei beide Hohlprofile 10 einen wabenförmigen Kernabschnitt oder Hohlbereich und jeweils zwei Anbindungsflansche 26 aufweisen. Entlang der gesamten Längserstreckung beider Hohlprofile 10 kann (nicht dargestellt) zur Gewährleistung einer innigen Verbindung mit dem Kunststoff 12 in insbesondere regelmäßigen Abständen eine Mehrzahl von Durchflusslöchern 32, ggf. mit Kegelkragen 34 (Fig. 2) oder formschlüssigem Kragen 34 (Fig. 3), vorgesehen sein. Zusätzlich oder alternativ können Profile 40 (Fig. 5) abschnittsweise oder über die gesamte Längserstreckung des Anbindungsflansches 26 vorgesehen sein. Bei einer Kombination von Durchflusslöchern 32 und Profil 40 kann vorgesehen sein, dass die Durchflusslöcher 32 im Bereich des Profils 40 oder (bei einer Betrachtung im Querschnitt, wie in Fig. 4 dargestellt) "vor oder hinter" dem Profil 40 angeordnet sind. Ähnlich wie das Profil 40 kann ein Endbereich des Anbindungsflansches 26 mit einem Kragen 34, wie in Fig. 1 dargestellt, versehen sein. Bei einem einstückigen Hohlprofil 10 mit zwei Anbindungsflanschen 26 kann ein Endbereich 42, wie in Fig. 5 dargestellt, ausgeführt sein.

Damit lässt sich die Erfindung kurz wie folgt darstellen: Es wird ein Verfahren zur Herstellung von Kunststoffspritz- oder -pressteilen, welche bei ihrem Formgebungsprozess mit einem oder mehreren metallischen Hohlprofilen 10 (oder ganz allgemein mit Profilen aus beliebigen Materialien oder beliebiger Geometrie) kombiniert werden, angegeben, bei dem in einem Spritz- bzw. Presswerkzeug für eine Aufnahme einer gespritzten oder gepressten Kunststoffmasse eine Kavität 24 ausgebildet ist, in die sich ein Anbindungsflansch 26 des metallischen Hohlprofils 10 erstreckt, wobei das oder jedes metallische Hohlprofil 10 durch Dichtflächen 28, 30 am Rande der Kavität 24 gegen die Press- bzw. Spritzkräfte der Kunststoffmasse 12 während des Formgebungsprozesses geschützt ist.

### Bezugszeichenliste

- 10: Metallhohlprofil
- 12: Kunststoff / Kunststoffmasse
- 14: Hybridbauteil
- 16: Kunststoffformgebungswerkzeug
- 18: Unterteil
- 19: Oberteil
- 20: Hohlprofilaufnahme
- 22: Innenkontur
- 24: Kavität
- 26: Anbindungsflansch
- 28: erste Dichtfläche
- 30: zweite Dichtfläche
- 32: Durchflussloch
- 34: Kragen
- 36: erste Blechschale
- 38: zweite Blechschale
- 40: Profil
- 42: Umlegebereich
- 44: Frontbereich
- 46: Kraftfahrzeug

## Patentansprüche

1. Verfahren zur Herstellung von Kunststoffspritz- oder -pressteilen, welche bei ihrem Formgebungsprozess mit einem oder mehreren metallischen Hohlprofilen (10) kombiniert werden, in einem Spritz- bzw. Presswerkzeug das für eine Aufnahme einer gespritzten oder gepressten Kunststoffmasse (12) eine Kavität (24) ausbildet, in die sich ein Anbindungsflansch (26) des metallischen Hohlprofils (10) erstreckt,
**dadurch gekennzeichnet, dass**
das oder jedes metallische Hohlprofil (10) durch Dichtflächen (28, 30) am Rande der Kavität (24) gegen die Press- bzw. Spritzdruckkräfte der Kunststoffmasse (12) während des Formgebungsprozesses geschützt ist.

2. Herstellungsverfahren nach Anspruch 1, wobei das metallische Hohlprofil (10) in dem Spritz- bzw. Presswerkzeug, insbesondere einer Werkzeughälfte (18, 19) des Spritz- bzw. Presswerkzeug (16), justiert oder fixiert wird.

3. Herstellungsverfahren nach Anspruch 2, wobei zur Justierung des metallischen Hohlprofils (10) eine zu dessen Aufnahme vorgesehene Hohlprofilaufnahme (20) eine zumindest abschnittsweise auf eine Außenkontur des metallischen Hohlprofils (10) abgestimmte Innenkontur (22) aufweist.

4. Herstellungsverfahren nach Anspruch 1, 2 oder 3, wobei der Anbindungsflansch (26) einen Kragen (34) und/oder ein oder mehrere Durchflusslöcher (32) zur formschlüssigen Verbindung zwischen dem Hohlprofil (10) und der Kunststoffmasse (12) aufweist.

5. Herstellungsverfahren nach Anspruch 4, wobei der Anbindungsflansch (26) mehrere Durchflusslöcher (32) jeweils mit Kragen (34) aufweist.

6. Herstellungsverfahren nach Anspruch 4 oder 5, wobei bei einem mehrteiligen Hohlprofil (10) mindestens ein Kragen (34) und/oder mindestens ein Durchflussloch (32) gleichzeitig zur formschlüssigen Anbindung an die Kunststoffmasse (12) und zur Verbindung der Hohlprofilteile (10) wirksam ist bzw. sind.

7. Kunststoffformgebungswerkzeug (16)zur Verwendung bei einem Herstellungsverfahren nach einem oder mehreren der vorangehenden Ansprüche, mit zumindest einer Hohlprofilaufnahme (20) zur Aufnahme des metallischen Hohlprofils (10), welches mindestens eine Kavität (24) zur Aufnahme der Kunststoffmasse (12) aufweist und in zumindest einem Übergangsbereich zwischen Hohlprofilaufnahme (20) und Kavität (24) eine Dichtfläche (28, 30) ausbildet.

8. Kunststoffformgebungswerkzeug nach Anspruch 7 mit einer in der Hohlprofilaufnahme (20) ausgebildeten Innenkontur (22), die zur Justierung des metallischen Hohlprofils (10) zumindest auf einen Abschnitt von dessen Außenkontur abgestimmt ist.

9. Verwendung eines Kunststoffformgebungswerkzeugs (16) nach einem der Ansprüche 7 oder 8 zur Durchführung des Verfahrens nach einem der Ansprüche 1 bis 7.
